# EUROPÄISCHE PATENTSCHRIFT

(11) **EP 3 581 825 B1**
(45) Veröffentlichungstag und Bekanntmachung des Hinweises auf die Patenterteilung: **11.08.2021**
(21) Anmeldenummer: 19179821.4
(22) Anmeldetag: 12.06.2019
(51) Int. Cl.: F16F 1/373, F24S 25/61

(54) **LAGEREINRICHTUNG, SOLARANLAGENANORDNUNG**
SUPPORT DEVICE, SOLAR ASSEMBLY
INSTALLATION DE SUPPORT, DISPOSITIF D'INSTALLATION SOLAIRE

(30) Priorität: 13.06.2018 DE 102018209482
(43) Veröffentlichungstag der Anmeldung: 18.12.2019
(73) Patentinhaber: K2 Systems GmbH, 71272 Renningen (DE)
(72) Erfinder: Koch, Bernd, 82395 Obersöchering (DE)
(74) Vertreter: Clarenbach, Carl-Philipp

(56) Entgegenhaltungen:
- EP-A1- 0 054 493
- EP-A2- 2 072 851
- WO-A2-96/18772
- DE-B- 1 275 892
- GB-A- 1 482 154
- GB-A- 2 276 697
- US-A- 2 862 255
- US-A- 3 863 909
- US-A1- 2002 108 340
- US-A1- 2015 256 120
- US-A1- 2017 362 840
- US-B2- 9 773 933

## Beschreibung

Die Erfindung betrifft eine Solaranlage mit einer Lagereinrichtung für die Lagerung einer Solaranlage auf einem Dach eines Bauwerks, insbesondere Gebäude, wobei die Solaranlage ein zumindest ein Solarmodul, insbesondere Photovoltaikmodul oder Solarthermiekollektormodul, tragendes Gestell mit zumindest einer dem Dach zugeordneten Montageschiene aufweist, mit zumindest einem Elastomerelement, das zwischen der Montageschiene und dem Dach anordenbar oder angeordnet ist, und mit Mitteln zum Anordnen des Elastomerelements an der Montageschiene.

Weiterhin betrifft die Erfindung eine Solaranlagenanordnung, mit einem Dach und einer auf dem Dach angeordneten Solaranlage, die ein zumindest ein Solarmodul tragendes Gestell mit zumindest einer Montageschiene aufweist, auf welcher das zumindest eine Solarmodul angeordnet ist, und mit zumindest einer Solaranlage wie sie vorstehend beschrieben wurde.

Aus dem Stand der Technik sind Lagereinrichtungen und Anordnungen der eingangs genannten Art bereits bekannt. Bei der Installation von Solaranlagen auf Flachdächern ist es üblich, diese am Dach nicht durch Verschraubung und/oder Vernieten zu befestigen, wozu die Dachabdichtung durchdrungen werden müsste, sondern, sie lediglich auf das Dach aufzulegen und durch Aufbringen von Ballast am Abheben und/oder Verschieben durch Windkräfte oder Hangabtriebskräfte zu hindern. Dabei kommt dem zwischen dem Dach und der Solaranlage wirkenden Reibungskoeffizienten eine besondere Bedeutung zu. Denn dieser bestimmt maßgeblich die Menge an Ballast, die erforderlich ist, um die Installation an deren Platz zu halten. Weil die Gestelle, welche üblicherweise die Solarmodule tragen, aus Metall gefertigt sind und in der Regel eine Vielzahl von Montageschienen aufweisen, auf welchen die Solarmodule anordenbar und befestigbar sind, ist es bekannt, zwischen Montageschiene und Dach ein schützendes Bauteil, üblicherweise als Bautenschutzmatte bezeichnet, anzuordnen, um das Dach vor mechanischen Einwirkungen aus dem Gestell und damit vor Abrieb beziehungsweise Durchdringung des Dachs und möglicher Undichtigkeit zu schützen. Als Schutzelement wird dabei häufig eine Bautenschutzmatte aus Elastomermaterial verwendet, die außerdem einen hohen Reibwert garantiert, welcher insbesondere zur Aufnahme von horizontal wirkenden Kräften von Vorteil ist. Damit auch die horizontal wirkenden Kräfte durch das Elastomerelement sicher aufgenommen werden können, um eine gewisse Druckfestigkeit zu gewährleisten, um die durch die Solaranlage bewirkten Druckkräfte aus Eigengewicht, Wind und Schnee oder Regen in das Dach einzuleiten, um langfristig die Dichtheit des Dachs und die Funktion der Solaranlage zu gewährleisten, ist eine Materialkompatibilität beziehungsweise Verträglichkeit notwendig, durch welche der Austausch beispielsweise von Weichmachern oder anderer Stoffe zwischen den einzelnen Bauteilen verhindert wird, um deren Funktion langfristig aufrecht zu erhalten. Bekannte Lagereinrichtungen sind beispielsweise in den Offenlegungsschriften DE 20 2012 101 346 U1, DE 20 2012 000 203 U1, EP 0 405 546 B1, US 2017/362840 A1, US 2 862 255 A oder WO9618772 A2 beschrieben. Gattungsgemäße Solaranlagen sind beispielsweise aus der Patentschrift EP 2 815 191 B1 und aus den Offenlegungsschriften US 9 773 933 B2 und US 2015/256120 A1 bekannt.

Aufgrund von auftretenden Temperaturänderungen kann es außerdem zu Längenänderungen des Gestells, insbesondere aller steif zusammenmontierten Komponenten der Solaranlage kommen, die zu einer Lageveränderung auf dem Dach führen. Übliche Bautenschutzmatten verhalten sich selbst verhältnismäßig steif, auch gegenüber horizontal wirkenden Kräften, sodass aufgrund der Längenänderungen Spannungen in dem Gestell der Solaranlage entstehen können, welche auf Dauer zu Beschädigungen führen können. Beispielsweise kriecht die Solaranlage auf den Bautenschutzmatten oder die gesamte Anlage einschließlich der Bautenschutzmatten kriecht auf dem Dach, wodurch Schäden direkt am Dach entstehen können. Um zu vermeiden, dass sich das Gestell von den Bautenschutzmatten löst und direkt auf das Dach gelangt, sind Mittel bekannt, die die Bautenschutzmatten fest an der Montageschiene anordnen, beispielsweise Klebemittel. Jedoch ist dadurch nicht die eventuelle Verschiebung der gesamten Anlage auf dem Dach zu verhindern.

Der Erfindung liegt daher die Aufgabe zugrunde, eine Solaranlage mit einer verbesserten Lagereinrichtung zu schaffen, welche eine verbesserte Lagerung der Solaranlage auf einem Dach, insbesondere Flachdach, gewährleistet, insbesondere ohne dass dabei ein erhöhter Aufwand bei der Montage und/oder Fertigung entsteht.

Die der Erfindung zugrundeliegende Aufgabe wird durch eine Solaranlage mit den Merkmalen des Anspruchs 1 gelöst. Diese hat den Vorteil, dass Längenänderungen, die zu einer horizontalen Verschiebung einer Montageschiene führen können, durch das Elastomerelement in vorteilhafter Art und Weise aufgenommen werden, ohne dass dadurch die Robustheit der Solaranlage insgesamt beeinträchtigt wird. Dabei wird eine vorteilhafte Ausbildung des Elastomerelements zu Nutze gemacht, welche einen vernachlässigbaren Mehraufwand bei der Fertigung und keinen Mehraufwand bei der Montage bedingt. Dies wird erfindungsgemäß dadurch erreicht, dass das zumindest eine Elastomerelement ein insbesondere der Montageschiene zuordenbares und zumindest im Wesentlichen flächig beziehungsweise eben ausgebildetes Oberteil und ein insbesondere dem Dach zuordenbares und zumindest im Wesentlichen flächig beziehungsweise eben ausgebildetes Unterteil aufweist, wobei das Oberteil parallel zu dem Unterteil ausgerichtet und beabstandet dazu angeordnet ist, und wobei das Oberteil mit dem Unterteil durch mehrere Verbindungsstege einstückig verbunden ist, die sich im unbelasteten Zustand jeweils gradlinig zwischen Oberteil und Unterteil und parallel zueinander entlang Oberteil und Unterteil erstrecken, wobei zumindest zwei benachbarte Verbindungsstege um einen insbesondere vorgegebenen Winkel zueinander geneigt ausgerichtet sind. Das Elastomerelement weist also im Querschnitt gesehen mehrere jeweils eine zumindest im Wesentlichen vertikale Verbindung herstellende Verbindungsstege auf, die gradlinig verlaufend ausgebildet sind, wobei zumindest zwei benachbarte Verbindungsstege geneigt zueinander angeordnet sind. Dadurch ergeben sich im Querschnitt des Elastomerelements mehrere benachbarte Hohlkammern, die sich durch das Elastomerelement hindurch erstrecken. Neben einer Gewichtseinsparung ergibt sich dabei der Vorteil, dass das Elastomerelement insgesamt elastisch verformbar ausgebildet ist. Insbesondere wird durch die Verbindungsstege erreicht, dass das Elastomerelement zusätzlich zu den vertikalen Auflagekräften auch seitlich beziehungsweise horizontal wirkende Kräfte, sicher aufgenommen und auf das Dach übertragen werden können. Erfolgt eine seitliche Beanspruchung des Elastomerelements quer zur Längserstreckung der Verbindungsstege, so werden beispielsweise die Verbindungsstege, die in eine erste Richtung geneigt ausgebildet sind, stärker belastet als die Verbindungsstege, die in eine zweite, zu der ersten Richtung beispielsweise spiegelbildliche Richtung geneigt sind. Durch die elastische Verformbarkeit des Elastomerelements insgesamt und damit auch der Verbindungsstege im Besonderen, wird erreicht, dass bei auftretenden Horizontalkräften der Verbindungsstege von der gradlinigen Ausführung ausgehend in eine gekrümmte Form unter elastischer Verformung bringbar sind, um insbesondere einen temperaturbedingten Längenunterschied der Solaranlage dauerhaft zu kompensieren. Dadurch wird erreicht, dass das Unterteil weiterhin auf dem Dach an der dafür vorgesehenen Position verbleibt, während sich das Oberteil zu dem Unterteil seitlich quer zur Längserstreckung der Verbindungsstege verlagern lässt. Dadurch werden durch die vorteilhafte Lagereinrichtung die zuvor bereits genannten Vorteile erreicht. Dabei ist beispielsweise jeder zweite Verbindungssteg senkrecht zu Oberteil und Unterteil beziehungsweise der jeweiligen Ebene von Oberteil und Unterteil ausgerichtet, während jeder andere der Verbindungsstege um den genannten Winkel geneigt zu der senkrechten Verbindung ausgerichtet ist.

Gemäß einer bevorzugten Ausführungsform der Erfindung sind jeweils benachbarte Verbindungsstege um den Winkel zueinander geneigt angeordnet. Dies wird beispielsweise dadurch erreicht, dass ein erster Verbindungssteg vertikal beziehungsweise senkrecht ausgerichtet ist, und der dazu benachbarte Verbindungssteg geneigt zur Senkrechten ausgerichtet sind. Alternativ wird dies dadurch erreicht, dass zwei benachbarten Verbindungsstege jeweils um den Winkel geneigt zu einer senkrechten Verbindung zueinander geneigt ausgerichtet sind. Dadurch, dass somit zu jedem Verbindungssteg ein benachbarter Verbindungssteg existiert, zu dem eine Neigung besteht, wird ein vielseitig einsetzbares Elastomerelement geboten, das sicher und gezielt die horizontal wirkenden Kräfte aufnimmt und Längenänderungen kompensiert.

Besonders bevorzugt sind die jeweils benachbarten Verbindungsstege spiegelbildlich zueinander geneigt, sodass Horizontalkräfte gleichmäßig in beide Horizontalrichtungen, senkrecht zur Längserstreckung der Verbindungsstege, aufgenommen beziehungsweise kompensiert werden können. Hierdurch ergeben sich trapezförmige Hohlkammern zwischen den Verbindungsstegen, die insbesondere abwechselnd orientiert ausgerichtet sind (die kurze Längsseite der Trapezform ist mal dem Oberteil und mal dem Unterteil zugeordnet). Darüber hinaus ergibt sich durch die spiegelbildlich geneigte Anordnung eine gleichmäßige Kraftverteilung über das Elastomerelement hinweg.

Gemäß einer weiteren Ausführungsform ist bevorzugt vorgesehen, dass Verbindungsstege des Elastomerelements auf einer Hälfte des Elastomerelements in eine erste Richtung und auf einer anderen beziehungsweise der anderen Hälfte des Elastomerelements in eine zu der ersten Richtung spiegelbildlichen Richtung geneigt ausgerichtet sind. Die Hälften werden dabei ausgehend von einer - im Querschnitt gesehen - vertikalen Mittelachse des Elastomerelements ausgebildet, sodass die Verbindungsstege auf der einen Seite der Mittelachse in eine erste Richtung und die Verbindungsstege auf der zweiten Seite der Mittelachse in die entgegengesetzte beziehungsweise spiegelbildliche Richtung geneigt sind. Auch hierdurch wird die zuvor genannte gleichmäßige Kraftverteilung beziehungsweise Längenkompensation des Elastomerelements und beide Horizontalrichtungen sicher gewährleistet. Gemäß einer weiteren Ausführungsform kann dabei vorgesehen sein, dass in jeder Hälfte auch vertikal ausgerichtete Verbindungsstege vorhanden sind.

Gemäß einer bevorzugten Weiterbildung der Erfindung liegt der Winkel in einem Bereich zwischen 3° und 15°. Dadurch wird berücksichtigt, dass ein Flachdach oder das Gestell üblicherweise eine leichte Neigung aufweist, um insbesondere das Ablaufen von Regenwasser zu gewährleisten. Durch ein Anpassen des Winkels zu der Neigung der Schräge des Flachdachs wird insbesondere gewährleistet, dass die vertikal wirkende Gewichtskraft der Solaranlage durch eine aufgrund ihrer Neigung vertikalen Ausrichtung zumindest einiger der Verbindungsstege vertikal durch diese Verbindungsstege in das Dach eingebracht wird, sodass durch die vertikal ausgerichteten Verbindungsstege die Resultierende aus Gewichtskraft und Hangabtriebskraft auf das Dach eingeleitet wird, ohne dass die Verbindungsstege zur Verkrümmung oder Ausknicken neigen. Stattdessen werden diese Verbindungsstege in ihrer geraden Erstreckung und somit in ihrer steifesten Wirkrichtung beansprucht.

Besonders bevorzugt beträgt der Winkel 12° bis 13°. Dies entspricht der Resultierenden aus einer üblichen Neigung eines herkömmlichen Flachdachs von etwa 5° und des Gestells, sodass der oben genannte Vorteil sicher gewährleistet ist. Der hier betroffene Winkel liegt dabei zwischen dem jeweiligen Verbindungssteg und einer gedachten senkrechten Verbindung zwischen Oberteil und Unterteil, also einer Geraden, die sowohl senkrecht zur Ebene des Oberteils als auch senkrecht zur Ebene des Unterteils (im unbelasteten Zustand) ausgerichtet ist.

Gemäß einer bevorzugten Weiterbildung der Erfindung ist vorgesehen, dass die Mittel zum Anordnen des Elastomerelements an der Montageschiene eine Vorrichtung zur formschlüssigen Verbindung des Oberteils an der Montageschiene aufweisen. Durch die formschlüssige Verbindung wird eine sichere Kraftübertragung von der Montageschiene auf das Oberteil des Elastomerelements gewährleistet, sodass beispielsweise auf eine Klebeverbindung verzichtet werden kann. Durch den Formschluss ist eine sichere und dauerhafte Kraftübertragung einerseits gewährleistet, und andererseits eine einfache Anordnung der Montageschiene an dem Elastomerelement oder andersherum. Insbesondere wird durch den Formschluss die Montage der Solaranalage mittels der Lagereinrichtung erleichtert.

Bevorzugt bildet die Vorrichtung eine Längsführung für die Montageschiene. Durch die Längsführung wird erreicht, dass die Montageschiene in ihrer Längserstreckung relativ zu dem Elastomerelement verschiebbar ist, an einer seitlichen Bewegung zu dem Elastomerelement, also insbesondere quer zur Längserstreckung, jedoch gehindert ist. Dadurch werden seitlich die Kräfte sicher aufgenommen und insbesondere Längenänderungen durch eine Verformung des Elastomerelements kompensiert, und in Längserstreckung eine Längenänderung der Montageschiene zumindest im Wesentlichen unabhängig von dem Elastomerelement gewährleistet. Insbesondere erstreckt sich die Längsführung parallel zu der Längserstreckung der Verbindungsstege, sodass in Längserstreckung der Verbindungsstege das Elastomerelement verhältnismäßig steif ist und eine Verformung aufgrund von längswirkenden Kräften vermieden wird, und dass quer zur Längserstreckung der Verbindungsstege die insbesondere horizontal wirkenden Kräfte beziehungsweise Längenänderungen durch das Elastomerelement aufgenommen und insbesondere durch eine elastische Verformung der Verbindungsstege kompensiert werden können.

Gemäß einer bevorzugten Weiterbildung der Erfindung ist die Montageschiene quer zu ihrer Längserstreckung formschlüssig in der Längsführung gehalten beziehungsweise haltbar. Der Formschluss der Vorrichtung wirkt somit in beide Richtungen quer zur Längserstreckung der Verbindungsstege beziehungsweise Längsführung.

Weiterhin ist bevorzugt vorgesehen, dass die Vorrichtung zumindest eine Vertiefung und/oder Erhebung zum Bilden der Längsführung an dem Oberteil aufweist. So ist beispielsweise vorgesehen, dass in der freiliegenden Oberfläche beziehungsweise Oberseite des Oberteils eine im Querschnitt gesehene U-förmige Vertiefung ausgebildet ist, in welche die Montageschiene einsetzbar ist. Dabei ist die Breite der Vertiefung bevorzugt in Abhängigkeit von der Breite der Montageschiene derart gewählt, dass die Montageschiene spielbehaftet oder zumindest im Wesentlichen spielfrei quer zu ihrer Längserstreckung in der Vertiefung der Oberteils gehalten ist. Alternativ ist beispielsweise vorgesehen, dass in der Oberseite des Oberteils lediglich eine Vertiefung ausgebildet ist, deren Breite einem an der Montageschiene ausgebildeten Vorsprung entspricht, sodass die Montageschiene nur bereichsweise in dem Oberteil aufgenommen und längsgeführt ist. Die Vertiefung in dem Oberteil kann dabei auch durch zwei sich parallel zueinander erstreckende von dem Oberteil vorstehende Führungsstege gebildet sein.

Bevorzugt weist die Vorrichtung an dem Oberteil und/oder dem Unterteil zwei beabstandete und zumindest im Wesentlichen parallel zueinander angeordnete und nach außen vorstehende stegförmige Erhebungen auf, welche zwischen sich die Vertiefung ausbilden und zur Längsführung dienen.

Gemäß einer bevorzugten Weiterbildung der Erfindung ist die Vorrichtung dazu ausgebildet, die Montageschiene an zumindest einer ihrer Längsseiten formschlüssig zu hintergreifen. Dadurch ist ein unbeabsichtigtes Lösen des Elastomerelements von der Montageschiene sicher gewährleistet. Zur Montage wird das Elastomerelement beispielsweise in Längserstreckung auf die Montageschiene aufgeschoben beziehungsweise die Montageschiene in die Längsführung eingeschoben. Durch die Elastizität des Elastomermaterials ist alternativ oder zusätzlich ein Aufbiegen der Formschlussgeometrie zum Einführen oder Einklipsen der Montageschiene möglich. Insbesondere umgreift die Vorrichtung die Montageschiene beidseitig, sodass sich eine sichere formschlüssige Verbindung zwischen Montageschiene und Elastomerelement ausbildet.

Bevorzugt weist dazu zumindest eine der Erhebungen oder zumindest eine Seitenwand der in dem Oberteil ausgebildeten Vertiefung eine nutförmige Aussparung für einen Randbereich der Montageschiene auf. Wird die Montageschiene in die nutförmige Aussparung eingeschoben, wird sie von der Erhebung beziehungsweise dem Material des Elastomerelements hintergriffen und dadurch das Elastomerelement sicher an der Montageschiene angeordnet, sodass eine einfache Montage des an der Montageschiene vormontierten Elastomerelements gewährleistet ist.

Gemäß einer vorteilhaften Weiterbildung der Erfindung weist die Lagereinrichtung zumindest zwei Elastomerelemente, die aufeinander zwischen der Montageschiene und dem Dach anordenbar/angeordnet sind, auf, wobei die Elastomerelemente derart ausgerichtet sind, dass die Verbindungsstege des einen Elastomerelements sich zumindest im Wesentlichen senkrecht zur Längserstreckung der Verbindungsstege des anderen Elastomerelements längs erstrecken. Dadurch wird mittels der zwei übereinanderliegend angeordneten und um 90° zueinander verdreht ausgebildeten Elastomerelemente gewährleistet, dass Längenänderungen der Solaranlage horizontal in der Ebene der Solaranlage beziehungsweise des Dachs in zwei Raumrichtungen aufgenommen und kompensiert werden können, ohne dass sich dabei das auf dem Dach aufliegende Unterteil des untenliegenden Elastomerelements auf dem Dach verschiebt.

Vorzugsweise ist die Längsführung des einen Elastomerelements dabei dazu ausgebildet, dass das Unterteil des anderen Elastomerelements längsverschieblich zu lagern. Damit sind entweder die Unterseite des anderen Elastomerelements und/oder die Vertiefung des einen Elastomerelements derart aufeinander abgestimmt, dass das oben angeordnete Elastomerelement wie zuvor die Montageschiene in die Vertiefung des untenliegenden Elastomerelements einsetzbar und durch dieses zumindest quer zur Längserstreckung der Montageschiene beziehungsweise des anderen Elastomerelements formschlüssig gehalten ist. Vorzugsweise erstrecken sich die Verbindungsstege eines Elastomerelements in Längserstreckung des einen Elastomerelements und die Verbindungsstege des anderen Elastomerelements quer zur Längserstreckung des anderen Elastomerelements. Alternativ erstrecken sich die Verbindungsstege in ihrer Längserstreckung jeweils parallel zur Längserstreckung des jeweiligen Elastomerelements. Optional sind die beiden Elastomerelemente identisch ausgebildet.

Gemäß einer bevorzugten Weiterbildung der Erfindung ist das Oberteil des untenliegenden Elastomerelements dazu ausgebildet, mindestens zwei weitere Elastomerelemente nebeneinander längsverschieblich zu tragen. Dazu weist das Oberteil zwei Vertiefungen auf, die wie vorstehend beschrieben ausgebildet sind, und zwei parallel zueinander wirkende Längsführungen, in welche jeweils ein weiteres Elastomerelement einsetzbar ist, zu bilden.

Bevorzugt sind die Elastomerelemente dabei außerdem formschlüssig aneinander verschieblich gelagert, um eine sichere und einfache Montage zu gewährleisten.

Gemäß einer bevorzugten Weiterbildung der Erfindung ist in zumindest einer zwischen benachbarten Verbindungsstegen ausgebildeten Hohlkammer wenigstens ein Abstandshalter angeordnet, der eine Annäherung des Oberteils zu dem Unterteil begrenzt. Durch den Abstandshalter wird erreicht, dass insbesondere senkrecht zu Oberteil und Unterteil wirkende Kräfte auch bei einer Überlastung des Elastomerelements sicher von diesem aufgenommen werden können, ohne dass das Elastomerelement kollabiert. Auch sorgt der Abstandshalter dafür, dass bei horizontal wirkenden Kräften, die zu einer Verformung des Elastomerelements führen, ein Kollabieren sicher verhindert ist. Der Abstandshalter verhindert dabei, dass sich Oberteil und Unterteil über ein vorgebbares Maß hinaus zueinander annähern.

Besonders bevorzugt ist der zumindest eine Abstandshalter einstückig mit dem Elastomerelement ausgebildet, wodurch sich eine einfach handhabbare Einheit der Lagereinrichtung beziehungsweise das Elastomerelements ergibt. Insbesondere ist das Elastomerelement als Strangguss, -press- oder Extrusionsprofil ausgebildet, in welches der Abstandshalter integriert ist. Dazu sind bevorzugt der Abstandshalter wie auch die Verbindungsstege stegförmig derart ausgebildet, dass sie sich entlang der Längserstreckung des Elastomerelements insbesondere durchgehend erstrecken. Vorzugsweise weist das Elastomerelement zumindest zwei Abstandshalter auf, die spiegelbildlich zueinander in unterschiedlichen Hohlkammern angeordnet sind, um eine sichere Abstützung des Oberteils an dem Unterteil zu gewährleisten. Unter der spiegelbildlichen Anordnung wird nun dabei die Anordnung der Abstandshalter zu der vertikalen Mittelachse des Elastomerelements, wie sie vorstehend beschrieben wurde, verstanden.

Gemäß einer bevorzugten Ausführungsform der Erfindung weist der Abstandshalter beziehungsweise der jeweilige Abstandshalter ein an dem Oberteil angeordnetes erstes Sperrelement und ein an dem Unterteil angeordnetes zweites Sperrelement auf, die im unbelasteten Zustand des Elastomerelements beabstandet zueinander liegen. Der zwischen den Sperrelementen im unbelasteten Zustand verbleibende Abstand entspricht der maximal möglichen Annäherung des Oberteils zum Unterteil im belasteten Zustand. Damit ist durch eine einfache konstruktive Ausbildung der Sperrelemente und des dadurch verbleibenden Abstands im unbelasteten Zustand eine Anpassung des Elastomerelements an unterschiedliche Anforderungen beziehungsweise Belastungen anpassbar.

Weiterhin ist bevorzugt vorgesehen, dass zumindest eines der Sperrelemente eine Vertiefung zum bereichsweisen Aufnehmen des anderen Sperrelements desselben Abstandshalters aufweist. Durch die Vertiefung wird erreicht, dass bei einer Belastung des Elastomerelements das eine Sperrelement in die Vertiefung des anderen Sperrelements zumindest bereichsweise eindringen kann, wodurch quer zur Belastungsrichtung ein Formschluss zwischen den Sperrelementen entsteht, der verhindert, dass das eine Sperrelement von dem anderen Sperrelement abrutschen und dadurch die Funktion des Abstandshalters aufgehoben werden kann.

Weiterhin ist bevorzugt vorgesehen, dass zumindest eines der Sperrelemente durch eine Verformung des ansonsten flächig ausgebildeten Oberteils oder Unterteils gebildet ist. Durch das Integrieren des jeweiligen Sperrelements in die Form des Oberteils oder Unterteils wird insbesondere erreicht, dass eine Materialeinsparung erfolgt, durch welche das Elastomerelement eine Gewichtseinsparung erfährt, die sich auch in den Materialkosten niederschlägt. Vorzugsweise weisen außerdem zumindest einige der Verbindungsstege abschnittsweise eine Querschnittsverjüngung auf. Durch diese Querschnittsverjüngung sind die betroffenen Verbindungsstege abschnittsweise im Material geschwächt, sodass sie im Bereich der Querschnittsverjüngung eine geringere Steifigkeit beziehungsweise eine höhere Elastizität aufweisen. Hierdurch ist es möglich, Biegestellen der Verbindungsstege durch eine gezielte Materialschwächung beziehungsweise Querschnittsverjüngung vorzugeben, um einen sicheren Betrieb des Elastomerelements jederzeit zu gewährleisten.

Die erfindungsgemäße Solaranlagenanordnung mit den Merkmalen des Anspruchs 24 zeichnet sich durch zumindest eine erfindungsgemäße Solaranlage aus. Es ergeben sich hierdurch die bereits genannten Vorteile. Insbesondere ist vorgesehen, dass die Montageschiene in der Längsführung des Oberteils des einen Elastomerelements angeordnet ist, wobei, wenn nur ein Elastomerelement zwischen Montageschiene und Dach vorhanden ist, die Verbindungsstege des Elastomerelements sich vorzugsweise in Längserstreckung der Montageschiene erstrecken. Die Solarmodule sind bevorzugt als Photovoltaikmodule oder als Solarthermiekollektormodule ausgebildet.

Bevorzugt weist die Montageschiene zumindest einen Randbereich auf, der von der Längsführung des Elastomerelements hintergreifbar oder hintergriffen ist. Dazu weist die Montageschiene beispielsweise eine flache Längskante auf, die insbesondere in die nutförmige Aussparung der jeweiligen Erhebung einschiebbar oder eingeschoben ist.

Gemäß einer alternativen Ausführungsform der Erfindung weist die Montageschiene bevorzugt an zumindest einer ihrer Längskanten oder Randbereiche einen einen Randbereich des Oberteils umgreifenden Führungsabschnitt auf. Hierbei erfolgt somit eine kinematische Umkehr, bei welcher nunmehr die umgreifende Führungsfunktion durch die Montageschiene gewährleistet ist, welche das Oberteil des Elastomerelements seitlich umgreift, um eine formschlüssige Verbindung zumindest quer zur Längserstreckung beziehungsweise Längsführung zu erreichen.

Weiterhin ist bevorzugt vorgesehen, dass die Montageschiene an dem Elastomerelement verschraubt ist, wodurch eine dauerhafte sichere Verbindung von Montageschiene und Elastomerelement gewährleistet ist.

Alternativ oder zusätzlich ist bevorzugt die Montageschiene mit dem Elastomerelement verklebt.

Weitere Vorteile und bevorzugte Merkmale und Merkmalskombinationen ergeben sich aus zum zuvor Beschriebenen sowie aus den Ansprüchen. Im Folgenden soll die Erfindung anhand der Zeichnung näher erläutert werden. Dazu zeigen
- Figur 1: eine Solaranlage in einer vereinfachten perspektivischen Darstellung,
- Figur 2: ein vorteilhaftes Elastomerelement als Lagereinrichtung für die Solaranlage in einer perspektivischen Darstellung,
- Figur 3: eine vergrößerte Detailansicht der Solaranlage mit dem Elastomerelement,
- Figur 4: zwei Elastomerelemente zur Bildung der Lagereinrichtung in einer perspektivischen Darstellung,
- Figur 5: ein weiteres Ausführungsbeispiel der Lagereinrichtung mit zwei Elastomerelementen,
- Figur 6A bis 6F: vorteilhafte Ausführungsbeispiele zur Verbindung der Lagereinrichtung mit der Solaranlage, jeweils in einer vereinfachten Schnittdarstellung, und
- Figuren 7A bis 7E: vorteilhafte Weiterbildungen der Lagereinrichtung in jeweils einer vereinfachten Querschnittsdarstellung eines der Elastomerelemente.

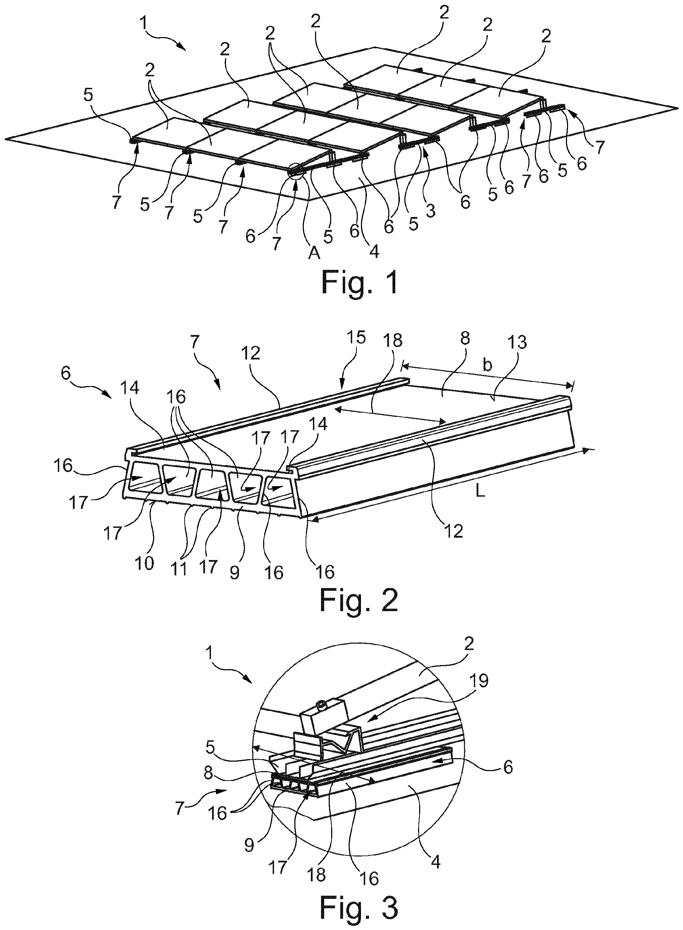

Figur 1 zeigt in einer perspektivischen Darstellung eine vorteilhafte Solaranlagenanordnung mit einer Solaranlage 1, die mehrere Solarmodule 2 aufweist, die auf einem Gestell 3 angeordnet sind, und mit einem Dach 4 eines Bauwerks, insbesondere Gebäudes, auf welchem das Gestell 3 abgestellt ist. Durch das Gestell 3 werden mehrere Reihen von Solarmodulen 2 hintereinanderliegend getragen, wobei die Solarmodule 2 dabei jeweils geneigt zu dem zumindest im Wesentlichen horizontal ausgerichteten Dach 4 angeordnet sind, um zu erreichen, dass Schmutz und Wasser von der Solarmodulen 2 selbsttätig ablaufen kann. Die Solarmodule 2 sind insbesondere als Photovoltaikmodule oder als Solarthermiekollektormodule ausgebildet, so das die Solaranalge 1 insbesondere eine Photovoltaikanlage oder eine Solarthermieanlage ist. Das Gestell 3 weist dabei mehrere Montageschienen 5 auf, auf welchen die Solarmodule 2 angeordnet sind. Jede Montageschiene 5 weist dabei außerdem mehrere Elastomerelemente 6 auf, die auf der Dachfläche des Dachs 4 aufliegen und die jeweilige Montageschiene 5 tragen.

Figur 2 zeigt in einer perspektivischen Darstellung eines der Elastomerelemente 6. Vorteilhafterweise sind die Elastomerelemente 6 alle gleich ausgebildet.

Das Elastomerelement 6 ist ein durch Gummiextrusion hergestelltes schubweiches Auflager. Dieses bildet eine Lagereinrichtung 7 für die Solaranlage 1, insbesondere für die Montageschiene 5. Das Elastomerelement 6 weist ein flächiges Oberteil 8 auf, und ein dazu parallel und beabstandet angeordnetes flächiges Unterteil 9. Dem Oberteil 8 ist eine der Montageschienen 5 zugeordnet und das Unterteil 9 ist dem Dach 4 zugeordnet. Oberteil 8 und Unterteil 9 weisen im Wesentlichen die gleiche rechteckförmige Kontur auf. Dabei weist das Elastomerelement 6 in Längserstreckung eine Länge L und quer dazu eine Breite b auf, wobei L größer als b ist. Das Unterteil 9 weist dabei insbesondere an der dem Dach 4 zugewandten Unterseite 10 mehrere sich in Längserstreckung des Elastomerelements 6 erstreckende Haltevorsprünge 11 auf, durch welche die Haftreibung zwischen dem Dach 4 und dem Elastomerelement 6 erhöht wird, insbesondere quer zur Längserstreckung des Elastomerelements 6.

Das Oberteil 8 weist zwei sich in Längserstreckung des Elastomerelements 6 erstreckende Erhebungen 12 auf, die sich jeweils an einem Seitenrand beziehungsweise einer Seitenkante des Oberteils 8 erstrecken und von der der Montageschiene 5 zugewandten Oberseite 13 des Oberteils 8 vorstehen. Die Erhebungen 12, die zwischen sich eine Vertiefung 12' ausbilden, weisen dabei seitlich jeweils eine nutförmige Aussparung 14 auf, wobei die Aussparungen 14 aufeinander zu ausgerichtet sind, sodass freie Enden der Erhebungen 12 aufeinander zu weisen. Die Erhebungen 12 bilden für die auf der Oberseite 13 angeordnete Montageschiene 5 eine Längsführung 15, durch welche die Montageschiene 5 zwar in ihrer Längserstreckung verschieblich zu dem Elastomerelement 6 gelagert ist, quer dazu jedoch formschlüssig durch die Erhebungen 12 daran gehalten ist. Dazu sind die Erhebungen 12 vorliegend derart auf die jeweilige Montageschiene 5 abgestimmt, dass die Montageschiene 5 im Wesentlichen spielfrei quer zu ihrer Längserstreckung auf dem Elastomerelement 6 gehalten ist. Durch die nutförmigen Aussparungen 14 wird außerdem erreicht, dass ein Abschnitt, insbesondere Randbereich, der Montageschiene 5 von der jeweiligen Erhebung 12 hintergriffen und dadurch ein Lösen der Montageschiene 5 von dem Elastomerelement 6, beispielsweise aufgrund erhöhter Windeinwirkung oder dergleichen, sicher verhindert ist. Vorteilhafterweise werden die Elastomerelemente 6 auf der jeweiligen Montageschiene 5 vormontiert und dann zusammen mit dem Gestell 3 auf dem Dach 4 platziert.

Zwischen dem Oberteil 8 und dem Unterteil 9 sind mehrere Verbindungsstege 16 angeordnet, die sich in Längserstreckung des Elastomerelements 6 parallel zueinander erstrecken. Die Verbindungsstege 16 sind dabei einstückig mit Oberteil 8 und Unterteil 9 ausgebildet und verlaufen im in Figur 2 dargestellten unbelasteten Zustand des Elastomerelements 6 gradlinig von dem Unterteil 9 zu dem Oberteil 8 oder andersherum. Dabei sind benachbarte Verbindungsstege 16 spiegelbildlich zueinander geneigt ausgerichtet, sodass zwischen den benachbarten Verbindungsstegen 16, Oberteil 8 und Unterteil 9 jeweils eine trapezförmige Hohlkammer 17 entsteht, die sich durch das Elastomerelement hindurch erstreckt, wobei die Hohlkammern 17 eine abwechselnde Orientierung aufweisen.

Die benachbarten Verbindungsstege sind somit in einem Winkel a abweichend von 90° zum Oberteil beziehungsweise Unterteil geneigt zueinander ausgerichtet. Insbesondere wird dabei der Winkel α zwischen einer senkrechten Verbindung beziehungsweise einer Senkrechten zu Oberteil und Unterteil gemessen und beträgt vorteilhafterweise 3° bis 15°, insbesondere 12° bis 13°.

Durch die Hohlkammern 17 erhält das Elastomerelement 6 ein geringes Gewicht. Durch die Verbindungsstege 16 wird eine elastische Verformbarkeit des Elastomerelements 6 quer zu seiner Längserstreckung, wie durch einen Doppelpfeil 18 gezeigt, ermöglicht. Aufgrund der elastischen Verformbarkeit des Elastomerelements 6 sind auch die Verbindungsstege 16 elastisch verformbar, wodurch sich diese bei einer Belastung in horizontaler Richtung quer zur Längserstreckung des Elastomerelements 6 verformen und beispielsweise gekrümmt werden. Hierdurch wird erreicht, dass das Oberteil 8 relativ zu dem Unterteil 9 horizontal beziehungsweise quer verschoben werden kann. Dies erlaubt es, dass das Gestell 3 aufgrund von temperaturbedingten Längenänderungen sicher auf den Elastomerelementen 6 gelagert ist, ohne dass das Dach 4 oder die Solaranlage 1 beschädigt werden. Insbesondere wird vermieden, dass das Elastomerelement 6 auf dem Dach 4 insgesamt verschoben wird. Durch die vorteilhafte Ausbildung des Elastomerelements 6 wird erreicht, dass lediglich das Oberteil 8 zu dem Unterteil 9 horizontal verschoben wird, wodurch Längenänderungen des Gestells 3 sicher ausgeglichen oder kompensiert werden können.

Figur 3 zeigt hierzu in einer vereinfachten Detailansicht gemäß dem in Figur 1 gezeigten Kreis A ein Ausschnitt der Solaranlage 1. Dieser zeigt das auf dem Dach 4 aufgelegte Elastomerelement 6, eine auf der Oberseite 13 des Elastomerelements 6 aufgelegte Montageschiene 5, auf welcher ein Solarmodul 2 mithilfe einer Schraubklemmverbindung 19 befestigt ist. Wirken nun horizontale Kräfte quer zur Längserstreckung des Elastomerelements 6, wie durch den Pfeil 18 gezeigt, so wird das Oberteil 8 des Elastomerelements 6 relativ zu dem Unterteil 9 verschoben und die Längenänderungen kompensiert.

Das Elastomerelement 6 hat den Vorteil, dass es vertikale Kräfte aufnehmen kann, ohne verformt zu werden, gleichzeitig aber eine horizontale Verschiebung der Oberseite 8 zu Unterseite 9 erlaubt, ohne dabei zu kollabieren. Wird der Winkel α in Abhängigkeit von der Dachneigung beziehungsweise der Neigung des Gestells 3 derart gewählt, dass zumindest jeder zweite Steg vertikal ausgerichtet ist, sodass Vertikalkräfte direkt vertikal in das Dach abgeleitet werden können, wird die Tendenz zum Ausknicken zumindest dieser Verbindungsstege reduziert. Beim seitlichen Verschieben der Oberseite 8 entsteht ein Gegendruck durch die Druckbeanspruchung der entgegen der Bewegungsrichtung geneigten Verbindungsstege 16 und gleichzeitig eine Zugbeanspruchung der in Bewegungsrichtung geneigten Verbindungsstege 16, wobei sich mit erhöhter Verformung der Gegendruck erhöht. Eine starr auf zwei oder mehrere derartiger Elastomerelemente 6 montierte Solaranlage 1 kann sich somit seitlich ausdehnen beziehungsweise längen, ohne die dadurch bedingte Positionsverschiebung auf die Unterseite beziehungsweise das Unterteil 9 des Elastomerelements 6 übertragen. Um diese Funktion auf zwei horizontale Richtungen zu übertragen, werden vorzugsweise zwei derartige Elastomerelemente um 90° zueinander gedreht übereinander angeordnet, wie im Folgenden anhand weiterer Ausführungsbeispiele näher erörtert wird.

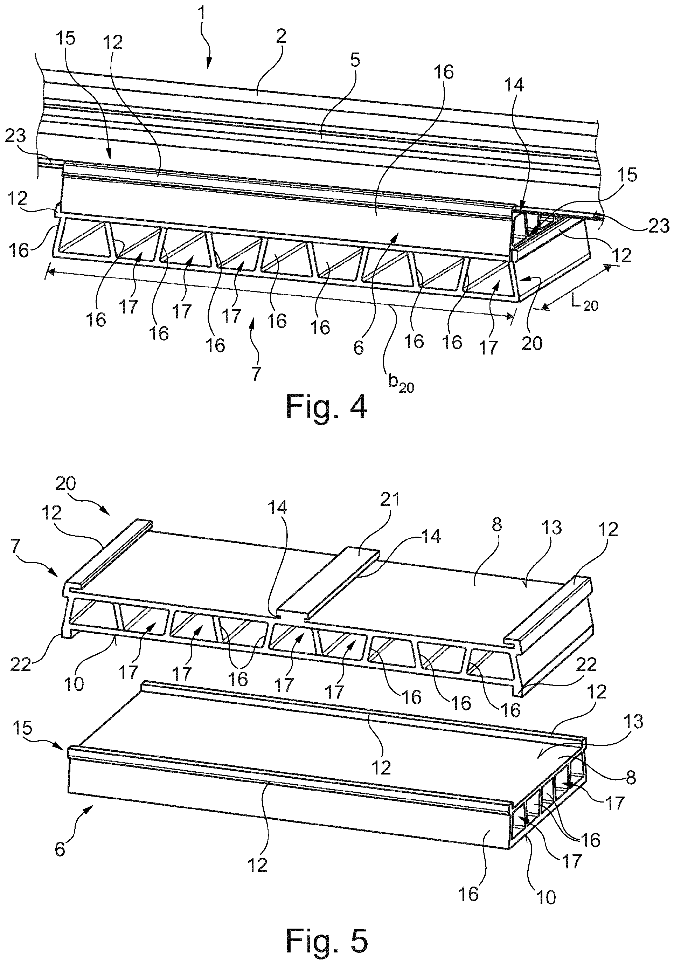

Figur 4 zeigt eine vorteilhafte Weiterbildung der Lagereinrichtung 7. Diese Weiterbildung zeichnet sich dadurch aus, dass zwei Elastomerelemente 6, 20 übereinanderliegend angeordnet sind. Dabei entspricht das Elastomerelement 6 dem zuvor beschriebenen Elastomerelement 6. Das Elastomerelement 20 ist entsprechend dem Elastomerelement 6 aufgebaut, weist jedoch andere Dimensionierungen auf. Insbesondere ist hierbei vorgesehen, dass die Länge L₂₀ des Elastomerelements 20 kleiner ist als dessen Breite b₂₀. Dabei ist die Länge L₂₀ derart gewählt, dass das Elastomerelement 6 zwischen den Erhebungen 12 des Elastomerelements 20 anordenbar ist, sodass die Erhebungen 12 für das Elastomerelement 6 die Längsführung 15 bilden. Gemäß dem vorliegenden Ausführungsbeispiel sind dabei die Erhebungen 12 des Elastomerelements 20 ohne die zuvor beschriebene Aussparung 14 ausgebildet. Optional können die Erhebungen 12 jedoch auch mit der Aussparung 14 ausgebildet sein, wobei dann das Elastomerelement 6 bevorzugt an seinen Stirnseiten einen Randabschnitt aufweist, der in die jeweilige Aussparung 14 zur formschlüssigen Hintergriffsanordnung einführbar ist.

Die beschriebene Anordnung hat zur Folge, dass sich die Verbindungsstege 16 des Elastomerelements 20 quer zu den Verbindungsstegen 16 des Elastomerelements 6 erstrecken. Die Elastomerelemente 6 und 20 wirken somit in unterschiedliche Richtungen kompensierend für wärmebedingte Längenänderungen des Gestells beziehungsweise der Solaranlage 1, sodass Längenänderungen in jede Horizontalrichtung durch die Elastomerelemente 26 zusammen sicher kompensiert werden.

Während gemäß dem Ausführungsbeispiel von Figur 4 vorgesehen ist, dass durch das Elastomerelement 6 eine Montageschiene 5 gehalten wird, ist gemäß dem Ausführungsbeispiel von Figur 5 vorgesehen, dass durch das Elastomerelement 20 zwei Montageschienen 5 oder zwei Elastomerelemente 6 parallel zueinander auf der Oberseite 13 des Oberteils 8 angeordnet werden können. Dazu weist das Oberteil 8 mittig eine zusätzliche Erhebung 21 auf, die beidseits mit den Aussparungen 14 versehen ist und sich parallel zu den Erhebungen 12 erstreckt, sodass jeweils zwischen einer der Erhebungen 12 und der Erhebung 21 ein Elastomerelement 6 oder eine Montageschiene 5 anordenbar ist. Dient das Elastomerelement 20 in diesem Fall zur Aufnahme mehrerer Montageschienen 5, wird es über dem Elastomerelement 6 angeordnet, wie in Figur 5 gezeigt, bei welchen die Anordnung im Vergleich zu dem Ausführungsbeispiel von Figur 4 umgekehrt ist. Damit die Elastomerelemente 20, 6 aneinander gehalten sind, weist das jeweils obenliegende Elastomerelement 20 oder 6 an seinem Seitenrand parallel zu den Erhebungen 12, jedoch an dem Unterteil 9 und von der Unterseite 10 vorstehend, zwei randseitige Erhebungen 22 auf, welche das jeweils untenliegende Elastomerelement 6 oder 20 an seinen Stirnseiten umgreift, um eine formschlüssige Halterung der Elastomerelemente 6, 20 aneinander zu gewährleisten. Weil darüber hinaus das obenliegende Elastomerelement 6 oder 20 durch die Längsführung 15 an dem unteren Elastomerelement 20 oder 6 gehalten ist, ergibt sich der Vorteil, dass eine in der horizontalen Ebene formschlüssige Verbindung zwischen den Elastomerelementen 6 und 20 insgesamt gewährleistet ist.

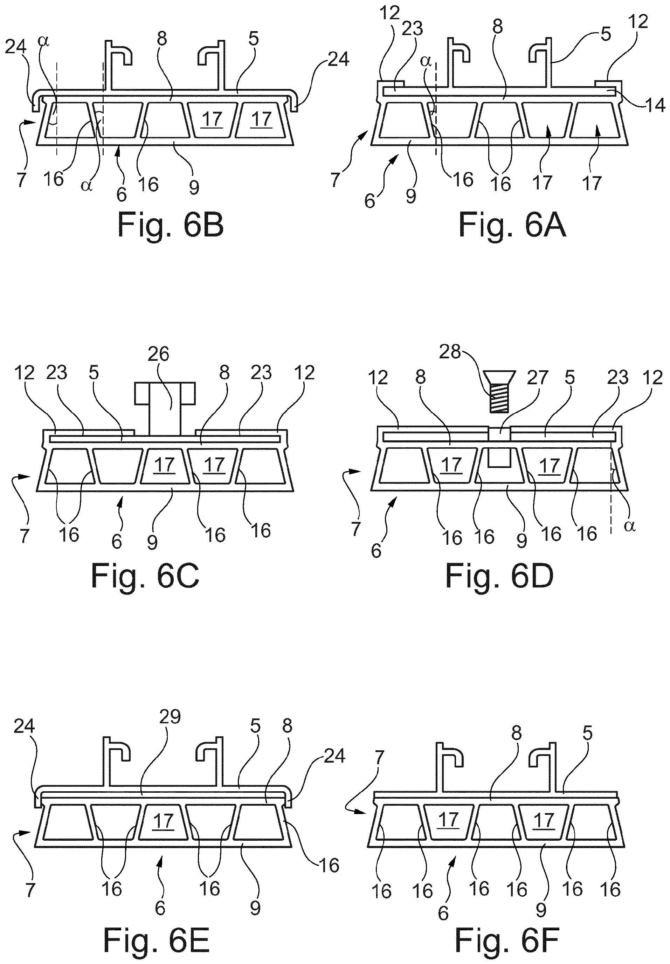

Figuren 6A bis 6E zeigen unterschiedliche Ausführungsbeispiele der Elastomerelemente 6, 20, mit Bezug auf das Elastomerelement 6, bei welchem die Mittel zur Anordnung des Elastomerelements 6 an der jeweiligen Montageschiene 5 in unterschiedlichen Varianten vorgestellt werden. Dazu zeigen die Figuren 6A bis 6E jeweils das Elastomerelement 6 mit der darauf angeordneten Montageschiene 5 in einer Querschnittsdarstellung.

Das Ausführungsbeispiel von Figur 6A entspricht dem Ausführungsbeispiel von Figur 3. Dabei ist die Montageschiene 5 mit einem Randbereich 23 in die Aussparung 14 der jeweiligen Erhebung 12 beidseitig eingeschoben, sodass die Montageschiene 5 an ihrem Randbereich 23 durch die Erhebungen 12 und damit durch das Elastomerelement 6 formschlüssig hintergriffen ist.

Das Ausführungsbeispiel von Figur 6B unterscheidet sich von dem vorhergehenden Ausführungsbeispiel dadurch, dass der Formschluss quer zur Längserstreckung der Verbindungsstege dadurch gebildet ist, dass die Montageschiene 5 randseitig jeweils einen das Elastomerelement 6 an seinem Seitenrand umgreifenden, insbesondere stegförmig ausgebildeten Führungsabschnitt 24 aufweist, der eine Längsführung der Montageschiene 5 an dem Elastomerelement 6 gewährleistet.

Gemäß dem Ausführungsbeispiel von Figur 6C ist vorgesehen, dass die Montageschiene 5 zusammen mit dem Elastomerelement 6 ein Verbundelement 25 ausbildet. Dies ist insbesondere dadurch erreicht, dass das Elastomerelement 6 auf die Montageschiene 5 aufgespritzt ist, sodass diese vom Material des Elastomerelements 6 umschlossen und dadurch hintergriffen ist. Vorteilhafterweise weist die Montageschiene 5 in diesem Fall einen oder mehrere Gewindestifte 26 zur Befestigung der Solarmodule 2 und/oder weiterer Gestellelemente des Gestells 3 auf.

Das Ausführungsbeispiel von Figur 6D unterscheidet sich von dem Ausführungsbeispiel von Figur 6C dadurch, dass anstelle des Gewindestifts 26 eine Gewindehülse 27 vorhanden ist, in welche eine Befestigungsschraube 28 des Gestells einschraubbar ist.

Das Ausführungsbeispiel von Figur 6E unterscheidet sich von dem Ausführungsbeispiel von Figur 6B dadurch, dass zwischen der Montageschiene 5 und dem Elastomerelement 6 ein Klebemittel 29 vorhanden ist, um eine dauerhafte Verbindung zu gewährleisten.

Das Ausführungsbeispiel von Figur 6F sieht vor, dass die Montageschiene 5 lediglich auf die Oberseite 13 des Elastomerelements 6 aufgelegt ist. Dabei wird die Haltekraft zwischen Montageschiene 5 und Elastomerelement 6 allein durch die Haftreibung zwischen der Montageschiene 5 und dem Elastomerelement 6 gewährleistet. Hierdurch wird eine besonders einfache Montage, bei welcher das Elastomerelement 6 insbesondere nicht an der Montageschiene 5 vormontiert werden muss, gewährleistet.

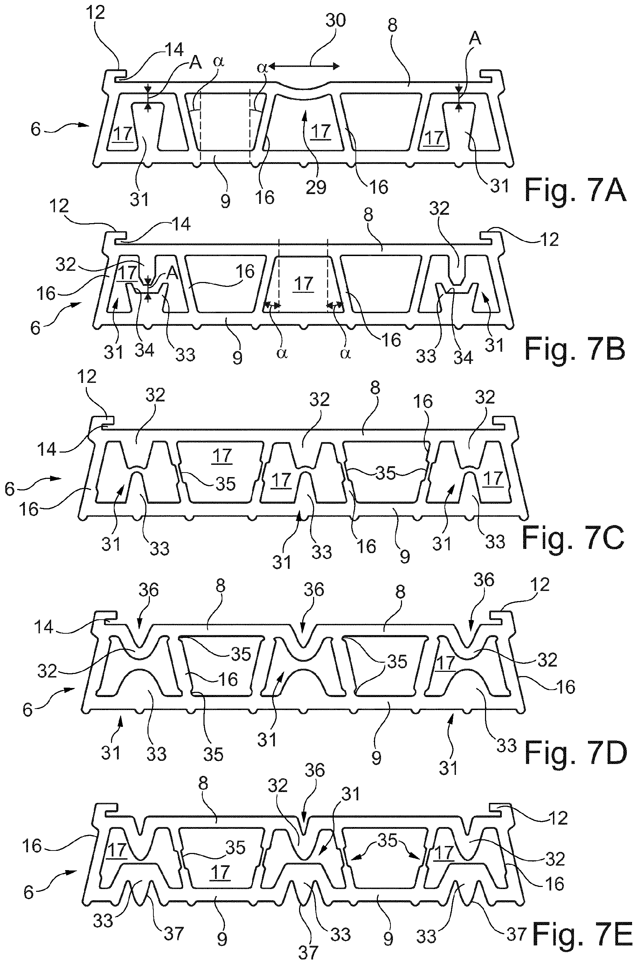

Figur 7A zeigt in einer vereinfachten Querschnittsdarstellung das Elastomerelement 6 aus Figur 2 gemäß einer vorteilhaften Weiterbildung, die auch auf das Elastomerelement 20 angewendet werden kann.

Im Unterschied zu dem Ausführungsbeispiel von Figur 2 weist hier das Oberteil 8 mittig eine Einwölbung 29 auf, durch welche das Oberteil 8 in eine mittlere Hohlkammer 17 des Elastomerelements 6 vertieft beziehungsweise eingewölbt ist, wodurch das Volumen der Hohlkammer 17 reduziert wird. Die Einwölbung 29 erstreckt sich in Längserstreckung insgesamt durch das Elastomerelement 6. Die Einwölbung 29 ermöglicht eine Streckung des Oberteils 8 in horizontaler Richtung, wie durch einen Doppelpfeil 30 angedeutet, wodurch ein einfaches Umgreifen einer Montageschiene 5 ermöglicht wird. Durch Strecken des Oberteils 8 in Querrichtung sind insbesondere die Erhebungen 12 mit den Vertiefungen 14 über die Montageschiene klipsbar, sodass die Montageschiene 15 nicht insgesamt in Längserstreckung in das Elastomerelement 6 eingeschoben werden muss. Dies erleichtert die Montage der Lagereinrichtung 7 deutlich.

Zusätzlich oder alternativ weist das Elastomerelement 6 gemäß dem Ausführungsbeispiel von Figur 7 zwei Abstandshalter 31 auf, die jeweils in der äußersten Hohlkammer 17 angeordnet sind, und sich entlang des Elastomerelements 6 durchgehend erstrecken. Die Abstandshalter 31 begrenzen die Annäherung des Oberteils 8 zu dem Unterteil 9. Dazu ist gemäß dem vorliegenden Ausfuhrungsbeispiel vorgesehen, dass die Abstandshalter 31 einstückig mit dem Unterteil 9 ausgebildet sind und sich in Richtung des Oberteils 8 in der jeweiligen Hohlkammer 17 im Wesentlichen vertikal erstrecken, wobei ein Abstand A zwischen dem Oberteil 8 und dem Abstandshalter 31 verbleibt. Dieser Abstand A definiert die maximale Wegstrecke, über welche das Oberteil 8 dem Unterteil 9 angenähert werden kann. Sobald das Oberteil 8 auf den Abstandshalter 31 trifft ist ein weiteres vertikales Annähern nicht mehr möglich, wodurch eine Maximalverformung des Elastomerelements 6 begrenzt wird. Hierdurch wird bei Überlastung des Elastomerelements 6 verhindert, dass es kollabiert. Bei einer Verformung durch vertikalen Druck von beispielsweise mehr als 2 bis 3mm, setzen die Abstandshalter 31 an dem Oberteil 8 auf und verhindern eine weitere Verformung in vertikaler Richtung. Dies ist beispielsweise dann von Bedeutung, wenn die Solaranlage 1 im Winter durch hohe Schneelasten mit starkem Druck auf die Lagereinrichtung 7 belastet wird und durch die Schneedecke eine relativ konstante Temperatur unter der Solaranlage 1 zu erwarten ist. In diesem Zeitraum sind keine hohen horizontalen Verformungen durch thermische Ausdehnungen zu erwarten und die Lagereinrichtung 7 muss keine Längenänderungen in horizontaler Richtung kompensieren. Nachdem der Schnee wieder weggeschmolzen ist, hebt sich die Lagereinrichtung durch die dauerelastischen Eigenschaften des Materials der Elastomerelemente 6, 20 wieder und kann die horizontalen Längenänderungen des Montagesystems wieder kompensieren. Dieser Überlastschutz erlaubt ein günstiges Verhältnis zwischen Schubweichheit und Druckfestigkeit der Lagereinrichtung 7, insbesondere eine große horizontale Weichheit bei hoher vertikaler Druckfestigkeit.

Gemäß dem Ausführungsbeispiel von Figur 7A sind die Abstandshalter im Querschnitt gesehen V-förmig ausgebildet, wobei sie an ihrer schmalen Stirnseite mit dem Unterteil 9 einstückig verbunden sind.

Figuren 7B bis 7E zeigen weitere Ausführungsbeispiele des Elastomerelements 6, das Abstandshalter 31 aufweist.

Gemäß dem Ausführungsbeispiel von Figur 7B sind die Abstandshalter 31 im Unterschied zu dem vorhergehenden Ausführungsbeispiel zweigeteilt ausgebildet. Dazu weist der jeweilige Abstandshalter 31 zwei Sperrelemente 32 und 33 auf, wobei das Sperrelement 32 einstückig mit dem Oberteil 8 und das Sperrelement 33 einstückig mit dem Unterteil 9 ausgebildet ist. Die Sperrelemente 33, 32 liegen einander in der jeweils äußersten Hohlkammer 17 gegenüber und in vertikaler Richtung beabstandet zueinander, um den Abstand A zu definieren. Das dem Unterteil 9 zugeordnete Sperrelement 33 weist eine dem Sperrelement 32 zugewandte Vertiefung 34 auf, in welcher das Sperrelement 32 bereichsweise eindringen kann, wenn das Oberteil 8 sich in Richtung des Unterteils 9 bewegt. Durch diese Vertiefung 34 wird erreicht, dass das Sperrelement 32 in der Vertiefung des Sperrelements 33 quer zu seiner Längserstreckung formschlüssig gehalten ist, sodass es nicht von dem Sperrelement 33 abrutschen und dadurch die Funktion des Abstandshalters 31 aufheben kann.

Figur 7C unterscheidet sich zu dem Ausführungsbeispiel von Figur 7B dadurch, dass die Vertiefung 34 nunmehr in dem oben liegenden Sperrelement 32 ausgebildet ist. Darüber hinaus ist vorgesehen, dass im Unterschied zu Figur 7B, wo die Abstandshalter einen eckigen Querschnitt aufweisen, die Sperrelemente 32, 33 gerundet ausgebildet sind. Außerdem ist optional ein zusätzlicher Abstandhalter 31 in der mittleren Hohlkammer 17 angeordnet.

Darüber hinaus zeigt Figur 7C eine weitere optionale Ausbildung des Elastomerelements 6, die zusätzlich oder alternativ vorhanden sein kann, und die Ausbildung der Verbindungsstege 16 betrifft. Gemäß diesem Ausführungsbeispiel ist vorgesehen, dass die Verbindungsstege 16 jeweils eine Querschnittsverjüngung 35 insbesondere in einem mittleren Abschnitt des jeweiligen Verbindungselements - im Querschnitt gesehen -, aufweisen, durch welche das Material des jeweiligen Verbindungsstegs 16 abschnittsweise geschwächt und dadurch die Elastizität erhöht ist. Hierdurch wird eine Soll-Biegestelle des jeweiligen Verbindungsstegs erzeugt.

Gemäß dem Ausführungsbeispiel von Figur 7D ist vorgesehen, dass die Sperrelemente 32 des Oberteils 8 durch eine Verformung des Oberteils 8 gebildet sind. Die jeweilige Verformung 36 ähnelt dabei der Einwölbung 29 und erlaubt ein Dehnen beziehungsweise Auseinanderziehen des Oberteils 9 in horizontaler Richtung quer zur Längserstreckung der Verbindungsstege 16. Dadurch wird zum einen der Vorteil erreicht, dass die Montage vereinfacht wird, und zum anderen, dass Gewicht und Material gespart werden. Außerdem weisen die Verbindungsstege jeweils zwei Querschnittsverjüngungen 35, insbesondere jeweils endseitig, auf.

Figur 7E zeigt eine vorteilhafte Weiterbildung des Ausführungsbeispiels von Figur 7D, wobei hierbei nunmehr auch die dem Unterteil 9 zugeordneten Sperrelemente 33 durch eine Verformung des Unterteils 9 ausgebildet sind, die eine Aufweitung des Unterteils 9 in horizontalter Richtung erlauben. Um eine sichere Auflage und eine sichere Abstandshalterfunktion zu gewährleisten, weisen die Sperrelemente 33 in der Auswölbung einen Stützvorsprung 37 auf, der sicherstellt, dass die Sperrelemente 33 aufgrund der ausgewölbten Form nicht in Richtung der Dachauflage verformbar sind, wodurch die Abstandshaltefunktion ansonsten bei Überlastung aufgehoben werden könnte.

## Patentansprüche

1. Solaranlage (1) mit einer Lagereinrichtung (7) für die Lagerung der Solaranlage (1) auf einem Dach (4) eines Bauwerks, insbesondere Gebäude, wobei die Solaranlage (1) ein zumindest ein Solarmodul (2), insbesondere Photovoltaikmodul oder Solarthermiekollektormotul, tragendes Gestell (3) mit zumindest einer dem Dach (4) zuordenbaren Montageschiene (5) aufweist, mit zumindest einem Elastomerelement (6,20), das zwischen der Montageschiene (5) und dem Dach (4) anordenbar ist, und mit Mitteln zum Anordnen des Elastomerelements (6,20) an der Montageschiene (5), **dadurch gekennzeichnet, dass** das zumindest eine Elastomerelement (6,20) ein der Montageschiene (5) zugeordnetes und zumindest im Wesentlichen flächig ausgebildetes Oberteil (8) und ein dem Dach (4) zuordenbares und zumindest im Wesentlichen flächig ausgebildetes Unterteil (9) aufweist, wobei das Oberteil (8) parallel zu dem Unterteil (9) ausgerichtet und beabstandet dazu angeordnet ist, und wobei das Oberteil (8) mit dem Unterteil (9) durch mehrere Verbindungsstege (16) einstückig verbunden ist, die sich im unbelasteten Zustand jeweils gradlinig zwischen Oberteil (8) und Unterteil (9) erstrecken, sodass sich im Querschnitt des Elastomerelements (6,20) mehrere benachbarte Hohlkammern (17) ergeben, die sich durch das Elastomerelement (6,20) hindurch erstrecken, wobei zumindest zwei benachbarte Verbindungsstege (16) um einen Winkel (a) zueinander geneigt angeordnet sind.

2. Solaranlage nach Anspruch 1, **dadurch gekennzeichnet, dass** jeweils benachbarte Verbindungsstege (16) um den Winkel (a) zueinander geneigt angeordnet sind.

3. Solaranlage nach Anspruch 1 oder 2, **dadurch gekennzeichnet, dass** die jeweils benachbarten Verbindungsstege (16) spiegelbildlich zueinander geeignet sind.

4. Solaranlage nach einem der vorhergehenden Ansprüche, **dadurch gekennzeichnet, dass** Verbindungsstege (16) des Elastomerelements (6) auf einer Hälfte des Elastomerelements (6) in eine erste Richtung und auf einer anderen Hälfte des Elastomerelements (6) in eine zu der ersten Richtung spiegelbildlichen zweiten Richtung geneigt ausgebildet sind.

5. Solaranlage nach einem der vorhergehenden Ansprüche, **dadurch gekennzeichnet, dass** der Winkel (a) in einem Bereich zwischen 3° und 15° liegt.

6. Solaranlage nach einem der vorhergehenden Ansprüche, **dadurch gekennzeichnet, dass** der Winkel (a) 12° bis 13° beträgt.

7. Solaranlage nach einem der vorhergehenden Ansprüche, **dadurch gekennzeichnet, dass** die Mittel zum Anordnen des Elastomerelements an der Montageschiene eine Vorrichtung zur formschlüssigen Verbindung des Oberteils (8) mit der Montageschiene (5) aufweisen.

8. Solaranlage nach Anspruch 7, **dadurch gekennzeichnet, dass** die Vorrichtung eine Längsführung (15) für die Montageschiene (5) bildet.

9. Solaranlage nach einem der Ansprüche 7 und 8, **dadurch gekennzeichnet, dass** die Montageschiene (5) quer zu ihrer Längserstreckung zumindest im Wesentlichen spielfrei in der Längsführung (15) anordenbar/angeordnet ist.

10. Solaranlage nach einem der Ansprüche 8 und 9, **dadurch gekennzeichnet, dass** die Vorrichtung zumindest eine Vertiefung (12') und/oder Erhebung (12) zum Bilden der Längsführung an dem Oberteil (8) aufweist.

11. Solaranlage nach einem der Ansprüche 8 bis 10, **dadurch gekennzeichnet, dass** die Vorrichtung an dem Oberteil (8) und/oder dem Unterteil (9) zwei beabstandete und und zumindest im Wesentlichen parallel zueinander angeordnete und nach außen vorstehende stegförmige Erhebungen (12) aufweist.

12. Solaranlage nach einem der Ansprüche 8 bis 11, **dadurch gekennzeichnet, dass** die Längsführung (15) dazu ausgebildet ist, einen Randbereich (23) der Montageschiene (5) zu hintergreifen.

13. Solaranlage nach Anspruch 11, **dadurch gekennzeichnet, dass** zumindest eine der Erhebungen (12) eine nutförmige Aussparung (14) für die Montageschiene (5) aufweist.

14. Solaranlage nach einem der vorhergehenden Ansprüche, **dadurch gekennzeichnet, dass** die Lagereinrichtung zumindest zwei Elastomerelemente (6,20), die aufeinander zwischen der Montageschiene (5) und dem Dach (4) anordenbar sind, aufweist, wobei die Elastomerelemente (6,20) derart ausgerichtet sind, dass die Verbindungsstege (16) des einen Elastomerelements (6,20) sich senkrecht zu der Längserstreckung der Verbindungsstege (16) des anderen Elastomerelements (20,6) erstrecken.

15. Solaranlage nach Anspruch 14, **dadurch gekennzeichnet, dass** die Längsführung (15) eines der Elastomerelemente (6,20) dazu ausgebildet ist, das Unterteil (9) des weiteren Elastomerelements (20,6) längsverschieblich zu lagern.

16. Solaranlage nach einem der Ansprüche 14 und 15, **dadurch gekennzeichnet, dass** das Oberteil (8) des unten liegenden Elastomerelements (20) dazu ausgebildet ist, mindestens zwei weitere Elastomerelemente (6) längsverschieblich zu tragen.

17. Solaranlage nach einem der Ansprüche 14 bis 16, **dadurch gekennzeichnet, dass** die Elastomerelemente (6,20) formschlüssig aneinander verschieblich gelagert sind.

18. Solaranlage nach einem der Ansprüche 14 bis 17, **dadurch gekennzeichnet, dass** in zumindest einer zwischen benachbarten Verbindungsstegen (16) ausgebildeten Hohlkammer (17) zumindest ein Abstandshalter (31) angeordnet ist, der eine Annäherung des Oberteils (8) zu dem Unterteil (9) begrenzt.

19. Solaranlage nach Anspruch 18, **dadurch gekennzeichnet, dass** der zumindest eine Abstandshalter (31) einstückig mit dem Elastomerelement (6) ausgebildet ist.

20. Solaranlage nach einem der Ansprüche 18 und 19, **dadurch gekennzeichnet, dass** die Abstandshalter (31) ein an dem Oberteil (8) ausgebildetes Sperrelement (32) und ein an dem Unterteil (9) angeordnetes zweites Sperrelement (33) aufweist, die im unbelasteten Zustand des Elastomerelements (6) beabstandet voneinander angeordnet sind.

21. Solaranlage nach Anspruch 20, **dadurch gekennzeichnet, dass** zumindest eines der Sperrelemente (32,33) eines Abstandshalters (31) eine Vertiefung (34) zum bereichsweisen Aufnehmen des anderen Sperrelements (33,32) desselben Abstandshalters (31) aufweist.

22. Solaranlage nach einem der Ansprüche 20 und 21, **dadurch gekennzeichnet, dass** zumindest eines der Sperrelemente (32,33) durch eine Verformung des ansonsten flächig ausgebildeten Oberteils (8) oder Unterteils (9) gebildet ist.

23. Solaranlage nach einem der vorhergehenden Ansprüche, **dadurch gekennzeichnet, dass** zumindest einige der Verbindungsstege (16) abschnittsweise zumindest eine Querschnittsverjüngung (35) aufweisen.

24. Solaranlagenanordnung mit einem Dach (4) und einer auf dem Dach (4) anzuordnenden Solaranlage (1), die ein zumindest ein Solarmodul (2), insbesondere Photovoltaikmodul oder Solarthermiekollektormodul, tragendes Gestell (3) mit zumindest einer dem Dach (4) zugeordneten Montageschiene (5) aufweist, auf welcher das zumindest eine Solarmodul (2) angeordnet ist, und mit zumindest einer Lagereinrichtung (7) zur Lagerung der Solaranlage (1) auf dem Dach (4), **gekennzeichnet durch** die Ausbildung der Solaranlage (1) nach einem der Ansprüche 1 bis 23.

25. Solaranlagenanordnung nach Anspruch 24, **dadurch gekennzeichnet, dass** die Montageschiene (5) zumindest einen Randbereich (23) aufweist, der von der Längsführung (15) hintergreifbar ist.

26. Solaranlagenanordnung nach einem der vorhergehenden Ansprüche, **dadurch gekennzeichnet, dass** die Montageschiene (5) an zumindest einer ihrer Längskanten einen einen Randbereich des Oberteils (8) umgreifenden Führungsabschnitt (24) aufweist.

27. Solaranlagenanordnung nach einem der vorhergehenden Ansprüche, **dadurch gekennzeichnet, dass** die Montageschiene (5) an dem Elastomerelement (6,20) verschraubt ist.

28. Solaranlagenanordnung nach einem der vorhergehenden Ansprüche, **dadurch gekennzeichnet, dass** die Montageschiene (5) mit dem Elastomerelement (6,20) verklebt ist.

## Claims

1. A solar assembly (1) with a supporting device (7) for supporting the solar assembly (1) on a roof (4) of a structure, in particular a building, whereby the solar assembly (1) has a rack (3) carrying at least one solar module (2), in particular photovoltaic module or solar thermal collector module, the rack having at least one mounting rail (5) allocable to the roof (4), with at least one elastomeric element (6, 20) arrangeable between the mounting rail (5) and the roof (4), and with means for arranging the elastomeric element (6, 20) on the mounting rail (5), **characterised in that** the at least one elastomeric element (6, 20) has an upper part (8) allocated to the mounting rail (5) and having an at least substantially planar configuration, and a lower part (9) allocatable to the roof (4) and having an at least substantially planar configuration, wherein the upper part (8) is aligned in parallel to the lower part (9) and is arranged spaced apart therefrom, and wherein the upper part (8) is connected to the lower part (9) in one single piece by several connecting webs (16) which respectively extend, in an unloaded condition, in a straight line between the upper part (8) and the lower part (9), such that in the cross section of the elastomeric element (6, 20) several adjacent hollow chambers (17) extending through the elastomeric element (6, 20) are formed, wherein at least two adjacent connecting webs (16) are arranged with an incline towards each other in an angle (α).

2. The solar assembly according to claim 1, **characterised in that** respectively adjacent connecting webs (16) are arranged with an incline towards each other in the angle (α).

3. The solar assembly according to claim 1 or 2, **characterised in that** the respectively adjacent connecting webs (16) have a mirror-inverted incline towards each other.

4. The solar assembly according to any one of the preceding claims, **characterised in that** connecting webs (16) of the elastomeric element (6) are formed with an incline towards a first direction on one half of the elastomeric element (6) and with an incline towards a second direction that is mirror-inverted with regard to the first direction on a second half of the elastomeric element (6).

5. The solar assembly according to any one of the preceding claims, **characterised in that** the angle (α) is in a range between 3° and 15°.

6. The solar assembly according to any one of the preceding claims, **characterised in that** the angle (α) is 12° to 13°.

7. The solar assembly according to any one of the preceding claims, **characterised in that** the means for arranging the elastomeric element on the mounting rail have a device for the positively fitting connection of the upper part (8) to the mounting rail (5).

8. The solar assembly according to claim 7, **characterised in that** the device forms a longitudinal guide (15) for the mounting rail (5).

9. The solar assembly according to any one of claims 7 and 8, **characterised in that** the mounting rail (5) is arranged/arrangeable in the longitudinal guide (15) at least substantially without any clearance in the direction transverse to its longitudinal extension.

10. The solar assembly according to any one of claims 8 and 9, **characterised in that** the device has at least one depression (12') and/or elevation (12) for forming the longitudinal guide on the upper part (8).

11. The solar assembly according to any one of claims 8 to 10, **characterised in that** the device has two web-shaped elevations (12) on the upper part (8) and/or the lower part (9) that are spaced apart, are arranged at least substantially parallel to each other and project outwards.

12. The solar assembly according to any one of claims 8 to 11, **characterised in that** the longitudinal guide (15) is configured to engage with an border area (23) of the mounting rail (5) from behind.

13. The solar assembly according to claim 11, **characterised in that** at least one of the elevations (12) has a groove-shaped recess (14) for the mounting rail (5).

14. The solar assembly according to any one of the preceding claims, **characterised in that** the supporting device has at least two elastomeric elements (6, 20) which are arrangeable one on top of the other between the mounting rail (5) and the roof (4), wherein the elastomeric elements (6, 20) are oriented such that the connecting webs (16) of the one elastomeric element (6, 20) extend perpendicularly to the longitudinal extension of the connecting webs (16) of the other elastomeric element (20, 6).

15. The solar assembly according to claim 14, **characterised in that** the longitudinal guide (15) of one of the elastomeric elements (6, 20) is configured to support the lower part (9) of the other elastomeric element (20, 6) in a longitudinally displaceable manner.

16. The solar assembly according to any one of claims 14 and 15, **characterised in that** the upper part (8) of the lower elastomeric element (20) is configured to support at least two other elastomeric elements (6) in a longitudinally displaceable manner.

17. The solar assembly according to any one of claims 14 to 16, **characterised in that** the elastomeric elements (6, 20) are supported in a positively fitting manner so as to be displaceable along each other.

18. The solar assembly according to any one of claims 14 to 17, **characterised in that** in at least one hollow chamber (17) formed between adjacent connecting webs (16) at least one spacer (31) is arranged which delimits the approach of the upper part (8) towards the lower part (9).

19. The solar assembly according to claim 18, **characterised in that** the at least one spacer (31) is formed in one single piece with the elastomeric element (6).

20. The solar assembly according to any one of claims 18 and 19, **characterised in that** the spacer (31) has one locking element (32) formed on the upper part (8) and a second locking element (33) arranged on the lower part (9) which are arranged spaced apart from each other in the unloaded state of the elastomeric element (6).

21. The solar assembly according to claim 20, **characterised in that** at least one of the locking elements (32, 33) of one spacer (31) has a depression (34) for receiving, at least in certain regions, the other locking element (33, 32) of the same spacer (31).

22. The solar assembly according to any one of claims 20 and 21, **characterised in that** at least one of the locking elements (32, 33) is formed by a deformation of the otherwise planar upper part (8) or lower part (9).

23. The solar assembly according to any one of the preceding claims, **characterised in that** at least some of the connecting webs (16) have at least one cross-sectional taper (35) in some portions.

24. A solar installation assembly with a roof (4) and a solar assembly (1) to be arranged on the roof (4) and having a rack (3) carrying at least one solar module (2), in particular photovoltaic module or solar thermal collector module, the rack having at least one mounting rail (5), allocated to the roof (4), on which the at least one solar module (2) is arranged, and with at least one supporting device (7) for supporting the solar assembly (1) on the roof (4), **characterised by** the configuration of the solar assembly (1) according to any one of claims 1 to 23.

25. The solar installation assembly according to claim 24, **characterised in that** the mounting rail (5) has at least one border area (23) which is engageable by the longitudinal guide (15) from behind.

26. The solar installation assembly according to any preceding claim, **characterised in that** the mounting rail (5) has a guiding portion (24) on at least one of its longitudinal edges that engages around a border area of the upper part (8).

27. The solar installation assembly according to any one of the preceding claims, **characterised in that** the mounting rail (5) is screwed to the elastomeric element (6, 20).

28. The solar installation assembly according to any one of the preceding claims, **characterised in that** the mounting rail (5) is glued to the elastomeric element (6, 20).

## Revendications

1. Installation solaire (1) avec un dispositif de support (7) pour supporter l'installation solaire (1) sur le toit d'un construction (4), notamment d'un bâtiment, l'installation solaire (1) ayant un châssis-support (3) portant au moins un module solaire (2), notamment un module photovoltaïque ou un module collecteur solaire thermique, avec au moins un rail de montage (5) assignable au toit (4), avec au moins un élément d'élastomère (6, 20) qui peut être arrangé entre le rail de montage (5) et le toit (4), et avec des moyens pour arranger l'élément d'élastomère (6, 20) sur le rail de montage (5), **caractérisée en ce que** l'au moins un élément d'élastomère (6, 20) a une partie supérieure (8) assignée au rail de montage (5) et ayant une configuration au moins sensiblement plane, et une partie inférieure (9) assignable au toit (4) et ayant une configuration au moins sensiblement plane, la partie supérieure (8) étant orientée en parallèle à et arrangée de manière espacée de la partie inférieure (9), et la partie supérieure (8) étant reliée d'un seul tenant à la partie inférieure (9) par plusieurs arêtes de liaison (16) qui s'étendent, dans l'état non chargé, respectivement en ligne droite entre la partie supérieure (8) et la partie inférieure (9), de telle manière qu'ils se forment, en section transversale de l'élément d'élastomère (6, 20), plusieurs chambres creuses (17) adjacentes qui s'étendent à travers l'élément d'élastomère (6, 20), au moins deux arêtes de liaison (16) adjacentes étant arrangées de manière inclinée entre elles dans un angle (a).

2. Installation solaire selon la revendication 1, **caractérisée en ce que** des arêtes de liaison (16) respectivement adjacentes sont arrangées de manière inclinée entre elles dans l'angle (a).

3. Installation solaire selon la revendication 1 ou 2, **caractérisée en ce que** les arêtes de liaison (16) respectivement adjacentes sont inclinées entre elles de manière inversée en miroir.

4. Installation solaire selon l'une quelconque des revendications précédentes, **caractérisée en ce que** les arêtes de liaison (16) de l'élément d'élastomère (6) sur une moitié de l'élément d'élastomère (6) sont configurées de manière inclinée vers une première direction, et sur une autre moitié de l'élément d'élastomère (6) dans une seconde direction inversée en miroir par rapport à la première direction.

5. Installation solaire selon l'une quelconque des revendications précédentes, **caractérisée en ce que** l'angle (a) est dans la rangée entre 3° et 15°.

6. Installation solaire selon l'une quelconque des revendications précédentes, **caractérisée en ce que** l'angle (a) est de 12° à 13°.

7. Installation solaire selon l'une quelconque des revendications précédentes, **caractérisée en ce que** les moyens pour arranger l'élément d'élastomère sur le rail de montage présentent un dispositif pour la liaison par engagement positif de la partie supérieure (8) avec le rail de montage (5).

8. Installation solaire selon la revendication 7, **caractérisée en ce que** le dispositif forme un guidage longitudinal (15) pour le rail de montage (5).

9. Installation solaire selon l'une quelconque des revendications 7 et 8, **caractérisée en ce que** le rail de montage (5) est/peut être arrangé dans le guidage longitudinal (15) au moins sensiblement sans jeu dans la direction transversale à son extension longitudinale.

10. Installation solaire selon l'une quelconque des revendications 8 et 9, **caractérisée en ce que** le dispositif présente au moins un évidement (12') et/ou une élévation (12) pour former le guidage longitudinal sur la partie supérieure (8).

11. Installation solaire selon l'une quelconque des revendications 8 à 10, **caractérisée en ce que** le dispositif présente, au niveau de la partie supérieure (8) et/ou de la partie inférieure (9), deux élévations (12) sous forme d'arête qui sont espacées entre elles, sont arrangées au moins sensiblement en parallèle et font saillie vers l'extérieur.

12. Installation solaire selon l'une quelconque des revendications 8 à 11, **caractérisée en ce que** le guidage longitudinal (15) est configuré pour venir en prise avec une région de bord (23) du rail de montage (5) par l'arrière.

13. Installation solaire selon la revendication 11, **caractérisé en ce qu'**au moins l'une des élévations (12) présente un dégagement (14) sous forme de rainure pour le rail de montage (5).

14. Installation solaire selon l'une quelconque des revendications précédentes, **caractérisée en ce que** le dispositif de support présente au moins deux éléments d'élastomère (6, 20) qui peuvent être arrangés l'un sur l'autre entre le rail de montage (5) et le toit (4), les éléments d'élastomère (6, 20) étant orientés de telle manière que les arêtes de liaison (16) de l'un élément d'élastomère (6, 20) s'étendent perpendiculairement à l'extension longitudinale des arêtes de liaison (16) de l'autre élément d'élastomère (20, 6).

15. Installation solaire selon la revendication 14, **caractérisée en ce que** le guidage longitudinal (15) de l'un des éléments d'élastomère (6, 20) est configuré pour supporter la partie inférieure (9) de l'autre élément d'élastomère (20, 6) de manière à pouvoir se déplacer longitudinalement.

16. Installation solaire selon l'une quelconque des revendications 14 et 15, **caractérisée en ce que** la partie supérieure (8) de l'élément d'élastomère inférieur (20) est configurée pour porter au moins deux autres éléments d'élastomère (6) de manière à pouvoir se déplacer longitudinalement.

17. Installation solaire selon l'une quelconque des revendications 14 à 16, **caractérisée en ce que** les éléments d'élastomère (6, 20) sont supportés par engagement positif de manière à pouvoir se déplacer l'un le long de l'autre.

18. Installation solaire selon l'une quelconque des revendications 14 à 17, **caractérisée en ce qu'**au moins un espaceur (31) qui délimite l'approche de la partie supérieure (8) à la partie inférieure (9) est arrangé dans au moins une chambre creuse (17) formée entre des arêtes de liaison (16) adjacentes.

19. Installation solaire selon la revendication 18, **caractérisée en ce que** l'au moins un espaceur (31) est formé d'un seul tenant avec l'élément d'élastomère (6).

20. Installation solaire selon l'une quelconque des revendications 18 et 19, **caractérisée en ce que** l'espaceur (31) présente un élément de verrouillage (32) formé au niveau de la partie supérieure (8) et un second élément de verrouillage (33) arrangé au niveau de la partie inférieure (9), les deux étant espacés entre eux dans l'état non chargé de l'élément d'élastomère (6).

21. Installation solaire selon la revendication 20, **caractérisée en ce que** l'au moins un des éléments de verrouillage (32, 33) d'un espaceur (31) présente un évidement (34) pour recevoir, dans certaines régions, l'autre élément de verrouillage (33, 32) du même espaceur (31).

22. Installation solaire selon l'une quelconque des revendications 20 et 21, **caractérisée en ce que** l'au moins un des éléments de verrouillage (32, 33) est formé par une déformation de la partie supérieure (8) ou de la partie inférieure (9) qui par ailleurs ont une configuration plane.

23. Installation solaire selon l'une quelconque des revendications précédentes, **caractérisée en ce qu'**au moins certaines des arêtes de liaison (16) présentent au moins une réduction de la section transversale (35) en certaines portions.

24. Dispositif d'installation solaire avec un toit (4) et une installation solaire (1) à arranger sur le toit (4), l'installation ayant un châssis-support (3) portant au moins un module solaire (2), notamment un module photovoltaïque ou un module collecteur solaire thermique, avec au moins un rail de montage (5) associé au toit (4) sur lequel l'au moins un module solaire (2) est arrangé, et avec au moins un dispositif de support (7) pour supporter l'installation solaire (1) sur le toit (4), **caractérisé en ce que** l'installation solaire (1) est configurée selon l'une quelconque des revendications 1 à 23.

25. Dispositif d'installation solaire selon la revendication 24, **caractérisé en ce que** le rail de montage (5) présente au moins une région de bord (23) avec laquelle le guidage longitudinal (15) peut venir en prise par l'arrière.

26. Dispositif d'installation solaire selon l'une quelconque des revendications précédentes, **caractérisé en ce que** le rail de montage (5) présente, au niveau d'au moins un de ses chants longitudinaux, une portion de guidage (24) venant en prise autour d'une région de bord de la partie supérieure (8).

27. Dispositif d'installation solaire selon l'une quelconque des revendications précédentes, **caractérisé en ce que** le rail de montage (5) est vissé sur l'élément d'élastomère (6, 20).

28. Dispositif d'installation solaire selon l'une quelconque des revendications précédentes, **caractérisé en ce que** le rail de montage (5) est collé sur l'élément d'élastomère (6, 20).
